# EUROPEAN PATENT APPLICATION

(11) **EP 4 814 759 A1**
(43) Date of publication of application: **30.09.2026**
(21) Application number: 26159547.4
(22) Date of filing: 19.02.2026
(51) Int. Cl.: G06F 21/34, H04L 9/40, H04N 1/44

(54) **INFORMATION PROCESSING DEVICE, AUTHENTICATION SYSTEM, AND INFORMATION PROCESSING METHOD**

(30) Priority: 25.03.2025 JP 2025050581
(71) Applicant: Toshiba TEC Kabushiki Kaisha, Tokyo 141-8562 (JP)
(72) Inventor: Ida, Toshihiro, Tokyo 141-8562 (JP)
(74) Representative: Bandpay & Greuter

(57) **Abstract**

According to one embodiment, an authentication processing system includes an authentication server and a processing device requiring an account ID for at least some uses. The device has a local storage unit storing an account ID list listing card IDs in association with authenticated account IDs. A processor of the device receives a card ID from a card reader, compares the card ID to the list, permits use of the device when the card ID matches to the list, checks with the authentication server for validation when the card ID does not match with the list, permits use of the device if the card ID is validated by the server, then adds the card ID to the local account list, and regularly requests an updated account ID list from the server to be used as the local account list.

## Description

### FIELD

Embodiments described herein relate to an information processing device, an authentication system, and an information processing method.

### BACKGROUND

In the related art, one method for reducing the time required for an authentication in an authentication system is leaving authentication-related information on the authentication requesting computer after the user successfully logs in (authenticates) for the first time, then performing a subsequent authentication determination based, at least in part, on the authentication-related information left on the authentication requesting computer. This may limit the need to make a full authentication inquiry to an authentication server for the subsequent authentications from the authentication requesting computer.

However, with such a method, even after an account is deleted on the authentication server side, there may be the problem that the authentication-related information remains on the authentication requesting computer.

### DISCLOSURE OF INVENTION

To this end, there are provided an information processing device, an authentication processing system, and a non-transitory, computer-readable storage medium, as defined in accompanying claims.

### BRIEF DESCRIPTION OF THE DRAWINGS

FIG. 1 illustrates a block diagram of an authentication system according to an embodiment.
FIG. 2 illustrates a block diagram of an authentication server according to an embodiment.
FIG. 3 illustrates a block diagram of an information processing device.
FIG. 4 illustrates a block diagram of a processor.
FIG. 5 illustrates a flowchart of authentication processing.
FIG. 6 illustrates a flowchart of deletion processing.
FIG. 7 illustrates a flowchart of deletion processing.

### DETAILED DESCRIPTION

According to one embodiment, an information processing device capable of deleting information related to an account that is not present in an authentication server is provided.

In general, according to an embodiment, an authentication processing system includes an authentication server including: a server storage unit storing card IDs in association with valid account IDs, and a server communication interface connected to a network. The system also includes an information processing device. The device requires an account ID for at least some uses. The device includes a processor, a device communication interface connectable to the network, and a local storage unit storing an account ID list listing card IDs in association with account IDs previously authenticated as valid by the authentication server. The processor is configured to: receive a card ID from a card reader associated with the information processing device; compare the card ID to the account ID list in the local storage unit; permit use of the information processing device when the card ID corresponds to an account ID on the account ID list; transmit the card ID to the authentication server for validation when the card ID does not correspond to any account ID on the account ID list; permit use of the information processing device when the card ID is validated by the authentication server, and add the card ID to the account ID list in association with validated account ID; and request an updated account ID list from the authentication server and store the updated account ID list in the local storage unit as the account ID list.

Hereinafter, certain example embodiments will be described with reference to the drawings. The following embodiments are examples of devices and methods for describing the technical ideas and concepts of the present disclosure, but the technical ideas and concepts are not necessarily limited to specific details in these examples, such as the specifics shapes, structures, arrangements, types, and the like of components. In the following description, elements having substantially the same function and configuration are denoted by the same reference symbols, and redundant description of repeated elements may be omitted.

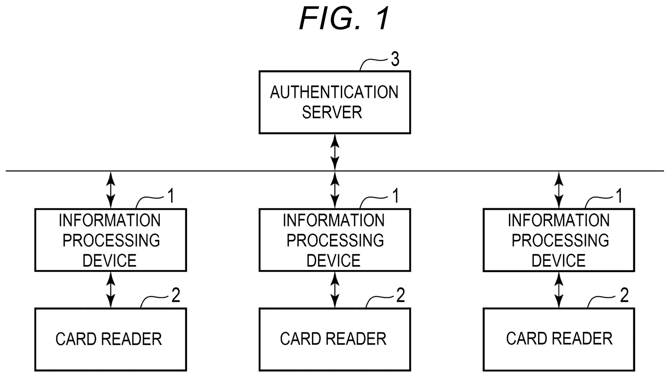

An outline of a configuration of an authentication system (corresponding to an authentication processing system) according to an embodiment will be described with reference to FIG. 1. FIG. 1 illustrates a block diagram of the authentication system according to the embodiment.

The authentication system is, for example, a system in which information on an integrated circuit (IC) card or the like is read using a card reader 2 then information from the IC card is sent to an authentication server 3 to request/confirm user authentication. The user authentication is performed, for example, to unlock a screen of the information processing device 1.

The authentication system includes at least one authentication server 3, a plurality of information processing devices 1, and a plurality of card readers 2 respectively connected to the information processing devices 1. The authentication server 3 and the information processing devices 1 may be connected using wired or wireless communication so as to be able to communicate with each other.

The card reader 2 is a device for transmitting and receiving data to and from the IC card. The card reader 2 is connected to the information processing device 1 so as to be capable of transmitting and receiving data/information to and from the processing device 1. The card reader 2 includes an antenna, a contact terminal, a communication control unit, and/or the like. For example, the card reader 2 physically and electrically connects to the contacts of a contact type IC card via the contact terminal(s) to send/receive data therebetween. When IC card is of a non-contact type (e.g., an NFC card), the card reader 2 communicates with the non-contact type IC card via an antenna in a non-contact manner. If the IC card is of a combination type, that is a card that can be used in a contact mode or a non-contact mode, the card reader 2 can communicate with the combination type IC card via the contact terminal or the antenna.

The card reader 2 has a function of transmitting card information, such as a card ID, read from the IC card to the information processing device 1. In some examples, the card information may include an employee number and/or a personal ID number. In the present context, the card ID is a unique ID for identifying a particular user.

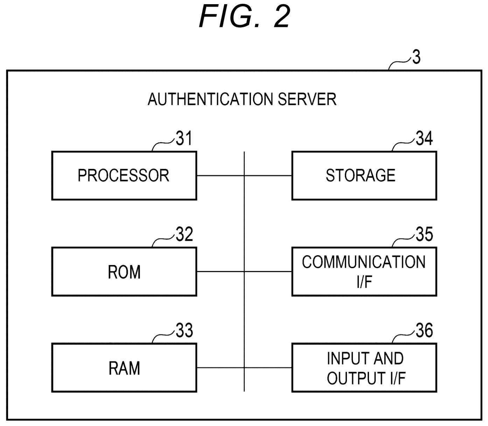

Next, a configuration of the authentication server 3 according to this embodiment will be described with reference to FIG. 2. FIG. 2 illustrates a block diagram of the authentication server 3 according to the embodiment.

The authentication server 3 includes a processor 31, a ROM 32, a RAM 33, a storage 34, a communication interface 35, and an input and output (I/O) interface 36.

The processor 31, the ROM 32, the RAM 33, the storage 34, the communication interface 35, and the input and output interface 36 are connected to each other via a bus communication line and mutually transmit and receive data. In some examples, processor 31, the ROM 32, the RAM 33, the storage 34, the communication interface 35, and the input and output interface 36 may mutually transmit and receive data by wireless communication or the like.

The processor 31 includes at least one processor such as a central processing unit (CPU), a micro processing unit (MPU), a graphics processing unit (GPU), and a field-programmable gate array (FPGA), and can implement the various described functions of the authentication server 3 by executing system software, application software, and/or firmware stored in the ROM 32, the RAM 33, or the storage 34.

The ROM 32 is a read-only non-volatile memory. The ROM 32 non-temporarily stores an activation program necessary for activating the authentication server 3 of the embodiment. The authentication server 3 is activated when the processor 31 executes this program. The ROM 32 is implemented as, for example, an erasable programmable read only memory (EPROM), and stores various settings for activation in addition to the activation program.

The RAM 33 is a writable and readable volatile memory. The RAM 33 temporarily stores programs necessary for processing by the processor 31 and data necessary for execution of the programs. The processor 31 calculates and manipulates data in the RAM 33 by, for example, executing a program, and stores a calculation result in the RAM 33.

The storage 34 is configured as a non-volatile memory such as a hard disk drive (HDD) or a solid-state drive (SSD). The storage 34 non-temporarily stores programs to be executed by the processor 31 and the data necessary for execution of the programs. The processor 31 loads a program and data from the storage 34 into the RAM 33 and executes various functions by executing the instructions (processing algorithm) of the program. The ROM 32 and the storage 34 can be used to store databases or the like in the authentication server 3.

For example, a database of the authentication server 3 stores a plurality of account IDs and a plurality of card IDs in association with each other. In this database, a shared or administrator account for which an access right to the authentication server 3 is granted in advance can be registered and stored. The database also stores an account ID list, which is a list of the plurality of account IDs. The account ID list can have account IDs listed/sorted based on the registration date and time of the account ID.

The communication interface 35 is connected to the information processing device 1, thereby enabling reception of data/information from the information processing device 1 and transmission of data/information to the information processing device 1. The communication interface may be connected to a network and may receive information from an external device and transmit information to an external device or the like.

The input and output interface 36 is connected to, for example, an input device and an output device. The input and output interface 36 enables the receiving of information from an input device and the outputting of information to an output device. Examples of input devices include a keyboard, a mouse, a touch panel, and a disk drive. The input device is not limited thereto, and may include or be any other input device type. The output device includes, for example, a display and a disk drive. The output device is not limited thereto, and may include an audio output unit, such as a speaker, or any other output device type. The input device and the output device may be integrated with other and perform both input and output functions as appropriate.

When the processor 31 of the authentication server 3 receives a card ID and information about an account name to which an access right may have been granted from the information processing device 1, the processor 31 searches the database using the account name and the card ID. When an account ID associated with the card ID is identified, the processor 31 transmits the identified account ID to the information processing device 1 via the communication interface. For example, the processor 31 may transmit information indicating a success or failure of the user authentication in accordance with the transmission of the account ID. A method of user authentication by the authentication server 3 is not limited to the above method, and any known type or method of authentication may be used.

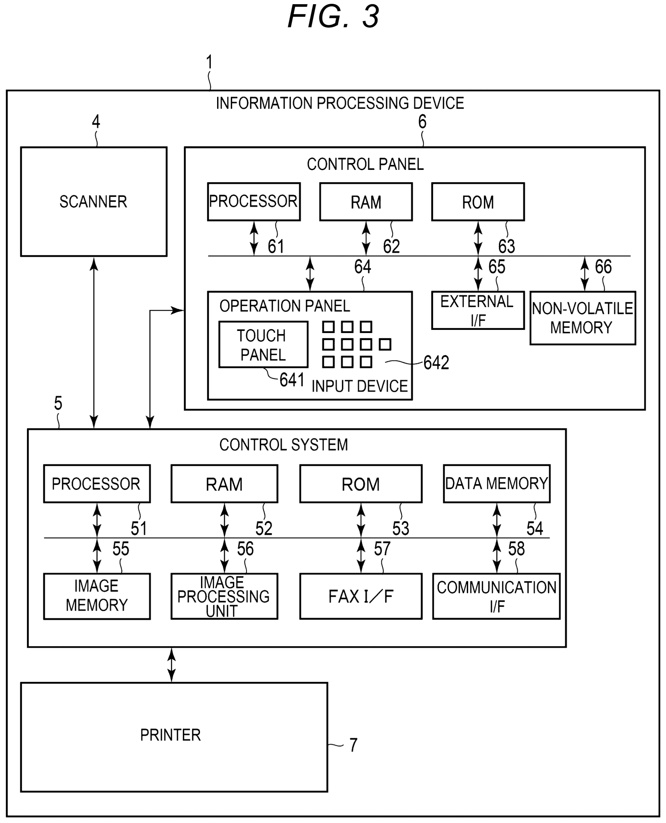

Next, a configuration of the information processing device 1 according to the embodiment will be described with reference to FIG. 3. FIG. 3 illustrates a block diagram of the information processing device 1 according to the embodiment.

The information processing device 1 is, for example, a multi-functional peripheral (MFP) and includes a scanner 4, a control system 5, a control panel 6, and a printer 7. The scanner 4, the control system 5, the control panel 6, and the printer 7 are connected to each other so as to transmit and receive data/information to and from each other.

The scanner 4 is a device that optically reads an image of a document and converts the image into image data. The scanner 4 scans a document according to an operation instruction from the control system 5. In addition, the scanner 4 outputs the image data of the read document to the control system 5.

The printer 7 forms an image on a sheet of paper or other image forming medium. The printer 7 prints an image on a sheet based on the image data supplied from the control system 5 under various printing conditions as designated by the control system 5. The printer 7 can be a printer using different image forming methods and may be of any type. For example, the printer 7 may be an electrophotographic printer, an inkjet printer, or a thermal transfer printer.

The control system 5 has a function of controlling the overall functioning of the information processing device 1. The control system 5 is connected to the various sub-units of the information processing device 1, such as the scanner 4, the printer 7, and the control panel 6. The control system 5 transmits and receives data/information to and from the scanner 4, the printer 7, and the control panel 6. That is, the control system 5 has a function of integrally controlling operations of these units, such as the scanner 4, the printer 7, and the control panel 6. The control system 5 also executes various types of processing, such as image processing.

The control system 5 includes a processor 51, a random-access memory (RAM) 52, a read-only memory (ROM) 53, a data memory 54, an image memory 55, an image processing unit 56, a FAX interface (I/F) 57, and a communication interface (I/F) 58. The processor 51, the RAM 52, the ROM 53, and the data memory 54 execute the control of the units and performs various types of processing.

The processor 51 can implement various functions of the information processing device 1 by executing system software, application software, and/or firmware stored in the ROM 53 and/or the data memory 54. The information processing device 1 may utilize two or more processors in combination and execute various types of processing by cooperation of the two or more processors.

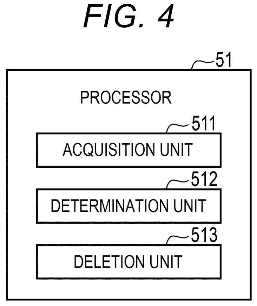

Here, a configuration of the processor 51 of the information processing device 1 will be described with reference to FIG. 4. FIG. 4 illustrates a block diagram of an example of the configuration of the processor 51 of the information processing device 1 according to the embodiment. The processor 51, when executing a control program or the like, provides an acquisition unit 511, a determination unit 512, and a deletion unit 513.

The acquisition unit 511, as function of the processor 51, acquires card information from the card reader 2 via the communication interface 58. The card information in this context includes a card ID.

The acquisition unit 511 acquires an account ID from the authentication server 3. In addition, the acquisition unit 511 also transmits a signal requesting an account ID list to the authentication server 3 at a preset date and time or at specified intervals. The acquisition unit 511 acquires the account ID list after transmitting this account list request signal.

The determination unit 512, as a function of the processor 51, searches the ROM 53 or the data memory 54 for an authenticated account ID associated with the card ID to determine whether the authenticated account ID corresponding to the card ID is already in the ROM 53 or the data memory 54.

Based on this determination result, the determination unit 512 may transmit the card ID acquired from the card reader 2 to the authentication server 3. That is, when it is determined that there is no corresponding authenticated account ID in the ROM 53 or the data memory 54, the determination unit 512 transmits the card ID to the authentication server 3 via the communication interface 58. Upon confirmation, the determination unit 512 stores the account ID acquired by the acquisition unit 511 as an authenticated account ID in association with the corresponding card ID.

The determination unit 512 may also identify an authenticated account by matching to an account ID included in the account ID list as acquired by the acquisition unit 511. The determination unit 512 also identifies when an account ID does not match any account ID on the account ID list. That is, an account ID that is different from all the account IDs included in the account ID list can be identified.

The deletion unit 513 deletes an identified authenticated account ID and the card ID associated with the authenticated account ID from the information processing device 1, that is, the ROM 53 and the data memory 54.

The RAM 52 is a volatile memory. The RAM 52 is used as a so-called work area in which data temporarily used can be stored when the processor 51 performs various types of processing.

The ROM 53 is a read-only non-volatile memory. The ROM 53 stores a program such as an operating system or application software. The ROM 53 also stores data and the like used when the processor 51 executes various types of processing.

The data memory 54 corresponds to an auxiliary memory. The data memory 54 may be, for example, an electrically erasable programmable read-only memory (EEPROM), a hard disk drive (HDD), and/or a solid-state drive (SSD). The data memory 54 may store a part or all of the programs to be executed by the processor 51. The data memory 54 also stores data to be used when the processor 51 executes various types of processing, data generated in various types of processing by the processor 51, various set (parameter) values, and the like. The data memory 54 stores, for example, the card ID, the authenticated account ID associated with the card ID, and the account ID list. The ROM 53 and the data memory 54 are examples of a memory unit (or database) in the information processing device 1.

The ROM 53 and the data memory 54 are non-transitory computer readable storage media, and the information processing device 1 may be transferred with a program already stored therein, or without a program already stored therein. In the latter case, the information processing device 1 can read a program stored in a removable storage medium, such as an optical disk or a semiconductor storage memory, then write the program into the data memory 54 or the like. The information processing device 1 may also or instead download a program via a network or the like, then write the downloaded program into the data memory 54 or the like.

The image memory 55 includes a hard disk drive, a page memory, and the like. The image memory 55 stores image data. The image processing unit 56 performs image processing on the image data as appropriate.

The FAX interface 57 is for performing facsimile communication. The FAX interface 57 transmits data by FAX to a FAX number or an email address set by the processor 51. The communication interface 58 is a network interface for performing data communication with an external device via a network such as the Internet.

The control panel 6 is a user interface. The control panel 6 displays guidance to a user and receives an operation instruction from the user. The control panel 6 includes a processor 61, a RAM 62, a ROM 63, an operation panel 64, an external interface (I/F) 65, and a non-volatile memory 66.

The processor 61 integrally controls the control panel 6. The processor 61 is an arithmetic circuit that executes a program. The processor 61 is, for example, a CPU. The processor 61 executes various processing functions by executing programs stored in the ROM 63. The processor 61 supplies information input to the units of the control panel 6 to the control system 5. The processor 61 also controls the units of the control panel 6 in response to control signals from the control system 5.

The RAM 62 is a volatile memory. The RAM 62 is used as a so-called work area in which data temporarily used can be stored when the processor 61 performs various types of processing.

The ROM 63 is a read-only non-volatile memory. The ROM 63 stores a program such as an operating system or application software. The ROM 63 also stores data and the like used when the processor 61 executes various types of processing.

The operation panel 64 is a user interface. The operation panel 64 includes, for example, a touch panel 641 and an input device 642.

The touch panel 641 is, for example, a stack of a display screen, such as a liquid crystal display or an organic electro-luminescence (EL) display, and a sensing device that detects touch input. The display provided on the touch panel 641 displays screens for notifying the user of various information related to device operations or the like. In addition, the touch panel 641 receives a touch operation and a trace operation made by the user. A touch operation is, for example, an operation of touching various types of displayed text information, icons, buttons, or image information with a finger, a touch pen, or the like. A trace operation is, for example, an operation of tracing an area corresponding to different types of displayed text and image information with a finger or a pointing device. The touch panel 641 supplies information indicating a position touched by a user and the area traced by the user to the processor 61 as a detection signal.

The input device 642 receives an input operation from a user. The input device 642 is, for example, a button, a keyboard, a keypad, or a touchpad.

The processor 61 controls the screens displayed on the touch panel 641. The processor 61 displays various operation screens on the touch panel 641 in response to instructions from the control system 5. In addition, the processor 61 identifies the positions touched by the user and the areas traced by the user based on the detection signal from the touch panel 641. The processor 61 supplies information indicating a detected instruction content to the processor 51 of the control system 5. The processor 61 may detect content of an operation instruction according to a touch operation and a trace operation (trace state such as a trace area and time (speed)) on a display screen as performed by the user and detected by the touch panel 641.

An external interface 65 is connection interface for connecting an external device. The external interface 65 may be an interface conforming to a common standard such as a universal serial bus (USB) standard. For example, the external interface 65 can be connected to a portable storage device. The external interface 65 may also be connected to a numeric keypad or a portable keyboard.

The non-volatile memory 66 can be a non-volatile memory such as a hard disk drive (HDD) or a solid-state drive (SSD). The non-volatile memory 66 non-temporarily stores a program executed by the processor 61 and the data necessary for execution of the program. The processor 61 loads the program and data from the non-volatile memory 66 into the RAM 62 to perform various functions by executing the program.

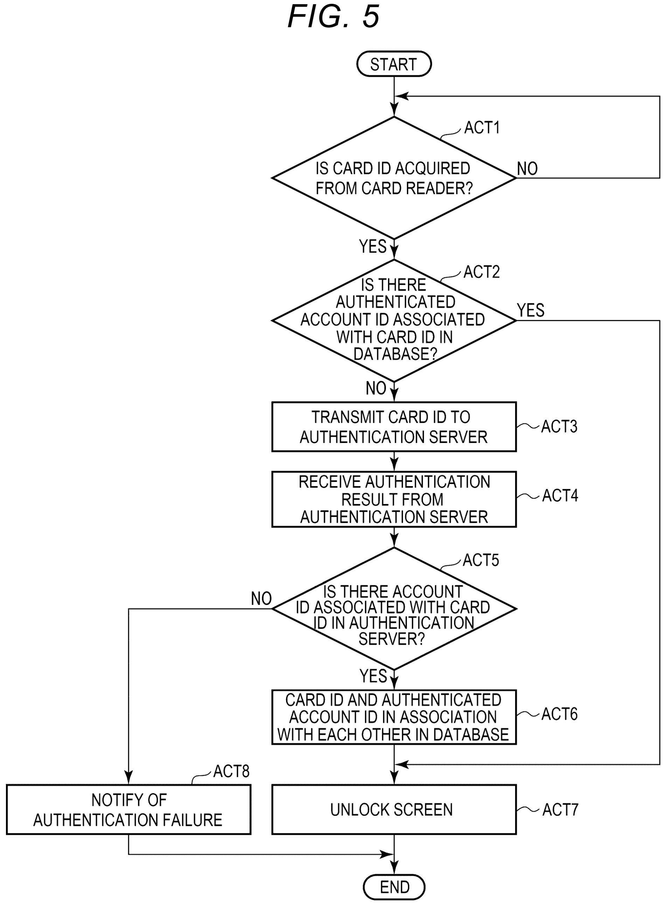

An authentication processing operation of the information processing device 1 according to the embodiment will be described below with reference to FIG. 5. FIG. 5 illustrates a flowchart for an example of the authentication processing of the information processing device according to the embodiment. Processing details in the following description of the operation are merely examples, and other processing that would obtain a similar result may be appropriately adopted.

An authentication processing operation begins when an IC card is read by the card reader 2, whether by a non-contact manner or a contact manner. The card reader 2 obtains the card ID (and potentially other card information) of the IC card and then transmits the card ID to the information processing device 1.

The acquisition unit 511 of the information processing device 1 maintains a standby state until a card ID is acquired from the card reader 2 (Act1). When the acquisition unit 511 acquires the card ID from the card reader 2 (YES in Act1), the determination unit 512 next determines whether there is an authenticated account ID associated with the card ID in a database or the like of the information processing device 1 (Act2).

The determination unit 512 searches the database for an authenticated account ID associated with the card ID, and if there is a corresponding authenticated account ID in the database (YES in Act2), the determination unit 512 proceeds to unlock the screen of the control panel (Act7) and the authentication processing operation ends.

If determination unit 512 searches the database for the authenticated account ID associated with the card ID, and there is no corresponding authenticated account ID in the database (NO in Act2), the determination unit 512 transmits the card ID to the authentication server 3 (Act3).

The acquisition unit 511 then waits to receive an authentication result (response) from the authentication server 3. That is, the acquisition unit 511 waits to receive an account ID from the authentication server 3. A success or failure notice for the authentication attempt may be transmitted, or the account ID may be transmitted when the authentication attempt is successful, and a signal indicating a failure may be transmitted if the authentication attempt fails.

The acquisition unit 511 receives an authentication result (response) from the authentication server 3 (Act4). The determination unit 512 then determines whether there is an account ID was found to be associated with the card ID in the authentication server 3 based on the authentication result received by the acquisition unit 511 (Act5). That is, the determination unit 512 determines whether the user authentication by the authentication server 3 was successful. When determination unit 512 determines that there is an account ID associated with the card ID in the authentication server 3 (YES in Act5), the account ID is then stored in the database of information processing device 1 as an authenticated account ID in association with the card ID (Act6).

After the processing of Act6, the determination unit 512 unlocks the screen of the control panel 6 (Act7), and the authentication processing operation ends. On the other hand, if there is no account ID associated with the card ID in the authentication server 3 (NO in Act5), the determination unit 512 notifies the user of the authentication failure (Act8) and then the authentication processing operation ends. As a notification of an authentication failure, a screen notifying the user of the authentication failure may be displayed on the screen of the control panel 6 or a voice or sound announcement of an authentication failure may be issued from the information processing device 1.

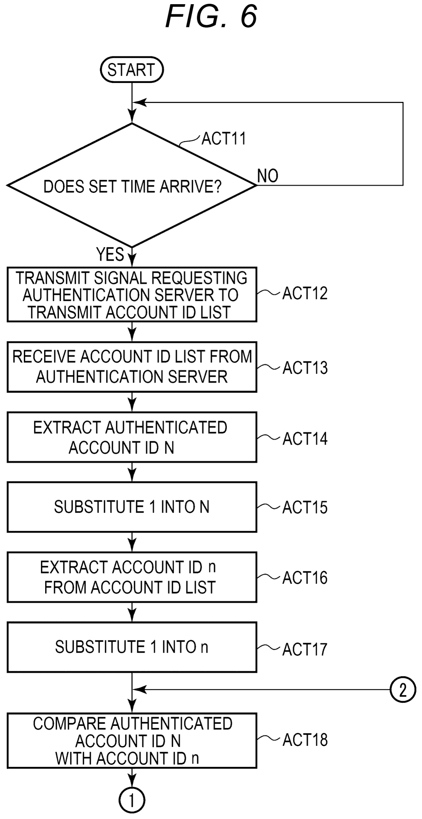

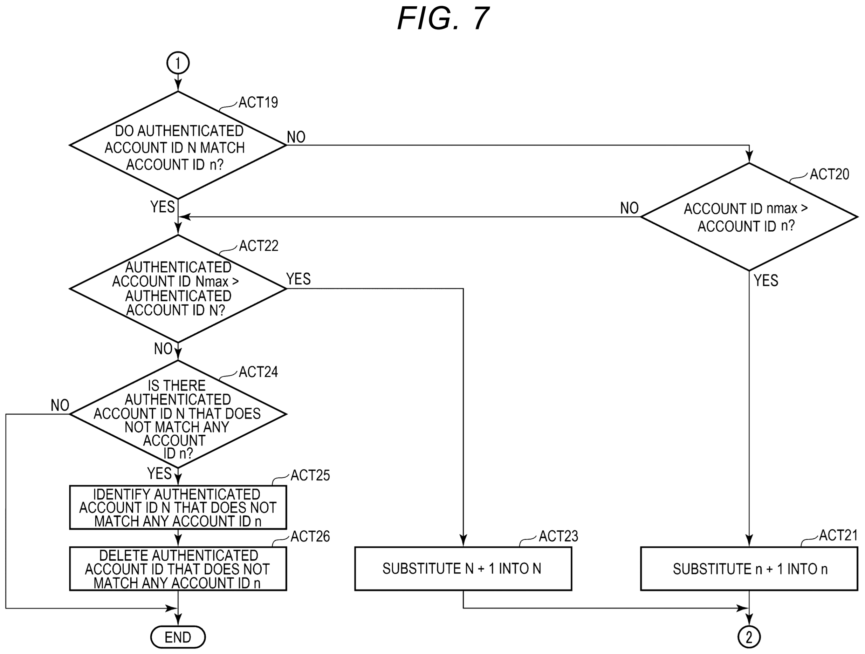

A deletion processing operation of the information processing device 1 according to the embodiment will be described below with reference to FIGS. 6 and 7. Processing details in the following description are merely examples, and other processing that can obtain similar results can be appropriately adopted.

The acquisition unit 511 checks whether a date and time as set by a user in advance arrives. That is, the acquisition unit 511 maintains a standby state until the set time arrives (Act11). When the preset date and time set arrives (YES in Act11), the acquisition unit 511 transmits a signal to the authentication server 3 requesting the authentication server 3 to transmit the account ID list (Act12).

In some examples, the date and time that can be set by the user in advance can be an interval such as Daily/Weekly/Monthly or a fixed date and time may be adopted instead of a regular interval. Alternatively, a manual setting may be adopted by which an operator decides when to request the account ID list update.

After the acquisition unit 511 transmits the signal requesting the authentication server 3 to transmit the account ID list, the acquisition unit 511 waits to receive the account ID list from the authentication server 3. The acquisition unit 511 eventually receives the account ID list from the authentication server 3 (Act13). After the acquisition unit 511 receives the account ID list, the determination unit 512 extracts authenticated accounts from the database. The determination unit 512 extracts each authenticated account ID (Act14). In this context, each individual extracted authenticated account ID is referred to as an authenticated account ID N, where N is an indexing variable from 1 up to the total (maximum) number (Nmax) of authenticated account IDs in the database. First, the variable N is initialized to a value of one (Act15). Accordingly, processing starts from the authenticated account ID at a first position on the list of the authenticated account IDs N in the database.

The determination unit 512 next extracts the account IDs from the account ID list. In this context, each individual extracted account ID from the account ID list is referred to as an account ID n, where n is an indexing variable from 1 up to the total (maximum) number (nmax) of account IDs extracted from the account ID list That is, the determination unit 512 extracts each individual account ID n from the account ID list (Act16). First, the variable n is initialized to 1 (Act17). Accordingly, processing starts from the account ID at the first position on the account ID list.

The determination unit 512 compares an authenticated account ID N to an account ID n (Act18). The determination unit 512 checks whether the authenticated account ID N matches the account ID n (Act19). When the authenticated account ID N and the account ID n are not the same account IDs (NO in Act19), the determination unit 512 checks whether the current n value has reached nmax (Act20).

When n is not yet reached nmax (YES in Act20), the determination unit 512 increases (increments) n by 1 (Act21), and proceeds to the processing of Act18.

When the authenticated account ID N and the account ID n are the same account IDs (YES in Act19) or when it is determined that the current n reaches nmax (NO in Act20), the determination unit 512 checks whether current N value reaches Nmax (Act22).

When the current N has not yet Nmax (YES in Act22), the determination unit 512 increase (increments) the N value by 1 (Act23), and proceeds to the processing of Act18. By executing the processing from Act18 to Act23, it is possible to check whether an authenticated account ID matches an account ID included on the account ID list.

When N reaches Nmax (NO in Act22), the determination unit 512 checks whether there is the authenticated account ID N that does not match any account ID n (Act24).

When it is determined that there is no authenticated account ID N without a matching account ID n (NO in Act24), the determination unit 512 ends the processing. When it is determined that there is an authenticated account ID N that does not match any account ID n (YES in Act24), the determination unit 512 identifies the particular authenticated account ID N that does not match an account ID n (Act25). That is, the authenticated account ID that does not match any account IDs among the authenticated account IDs stored in the database is identified.

The deletion unit 513 then deletes the identified authenticated account ID (and the card ID associated with the authenticated account ID) from the database of the information processing device 1 (Act26), and ends the processing.

The information processing device 1 according to the embodiment, may compare the account IDs stored in the database of the authentication server 3 and the authenticated account IDs stored in the database of the information processing device 1 even when the databases have not been synchronized with each other and there may be authenticated account IDs stored only in the database of the information processing device 1. It is thus possible to identify and delete the authenticated account IDs that do not match an account ID by requesting the authentication server 3 to transmit the account ID list at a preset date and time for comparing the account IDs included in the account ID list with the authenticated account IDs.

While several embodiments have been described, the embodiments have been presented by way of example and are not intended to limit the scope of the disclosure. These novel embodiments can be implemented in various other forms, and various omissions, substitutions, and modifications can be made without departing from the scope of the disclosure. The embodiments and modifications thereof are included in the scope of the disclosure, and are included in a scope of the disclosure disclosed in the claims.

## Claims

1. An information processing device (1) requiring an account ID for at least some uses, the information processing device comprising:
a device communication interface (58) connectable to an authentication server across a network;
a local storage unit storing an account ID list listing card IDs in association with account IDs previously authenticated as valid by the authentication server; and
a processor (51) configured to:
receive a card ID from a card reader associated with the information processing device;
compare the card ID to the account ID list in the local storage unit;
permit use of the information processing device when the card ID corresponds to an account ID on the account ID list;
transmit the card ID to the authentication server for validation when the card ID does not correspond to any account ID on the account ID list;
permit use of the information processing device when the card ID is validated by the authentication server, and add the card ID to the account ID list in association with validated account ID; and
request an updated account ID list from the authentication server and store the updated account ID list in the local storage unit as the account ID list.

2. The information processing device according to claim 1, wherein the processor is configured to request the updated account ID list at a preset time.

3. The information processing device according to claim 1 or 2, wherein the processor is configured to request the updated account ID list at fixed intervals.

4. The information processing device according to any one of claims 1 to 3, wherein the processor is configured to request the updated account ID list at a time when the information processing device is idle.

5. The information processing device according to any one of claims 1 to 4, wherein the information processing device is a multi-functional peripheral.

6. The information processing device according to any one of claims 1 to 5, further comprising:
a display screen, wherein
the permitted use of the information processing device when the card ID corresponds to the account ID on the account ID list includes a clearing of a lock screen displayed on the display screen to permit the user to use the display screen to operate the information processing device.

7. The information processing device according to any one of claims 1 to 6, further comprising:
a document scanner; and
a printer.

8. The information processing device according to any one of claims 1 to 7, wherein the processor is configured to identify an authenticated account by matching to an account ID included in the updated account ID list, preferably wherein the processor is also configured to identify an account ID which does not match any account ID on the updated account ID list.

9. The information processing device according to any one of claims 1 to 8, further comprising:
the card reader associated with the information processing device.

10. The information processing device according to claim 9, wherein the card reader is an integrated circuit (IC) card reader.

11. An authentication processing system, comprising:
an authentication server (3) including:
a server storage unit storing card IDs in association with valid account IDs; and
a server communication interface (35)connected to a network; and
an information processing device of any one of claims 1 to 9.

12. The authentication processing system according to claim 11, further comprising:
the card reader associated with the information processing device.

13. The authentication processing system according to claim 12, wherein the card reader is an integrated circuit (IC) card reader.

14. A non-transitory, computer-readable storage medium storing program instructions which when executed by a processor of an information processing device of any one of claims 1 to 10 in an authentication system of any one of claims 11 to 13 causes the information processing device to perform a method comprising:
receive a card ID from a card reader associated with the information processing device;
compare the card ID to an account ID list stored in a local storage unit;
permit use of the information processing device when the card ID corresponds to an account ID on the account ID list;
transmit the card ID to the authentication server for validation when the card ID does not correspond to any account ID on the account ID list;
permit use of the information processing device when the card ID is validated by an authentication server, and add the card ID to the account ID list in association with validated account ID; and
request an updated account ID list from the authentication server and store the updated account ID list in the local storage unit as the account ID list.

15. The non-transitory, computer-readable storage medium according to claim 14, the method further comprising: request the updated account ID list from the authentication server at a preset time and/or at fixed intervals.
